(19) **Europäisches Patentamt**
**European Patent Office**
**Office européen des brevets**

(11) Veröffentlichungsnummer: **0 230 958
B1**

(12) ## EUROPÄISCHE PATENTSCHRIFT

(45) Veröffentlichungstag der Patentschrift:
09.05.90

(51) Int. Cl.⁵: **C01B 21/14**

(21) Anmeldenummer: **87100688.8**

(22) Anmeldetag: **20.01.87**

(54) Verfahren zur Herstellung von Wässrigen Lösungen von freiem Hydroxylamin.

(30) Priorität: **22.01.86 DE 3601803**

(43) Veröffentlichungstag der Anmeldung:
**05.08.87 Patentblatt 87/32**

(45) Bekanntmachung des Hinweises auf die Patenterteilung:
**09.05.90 Patentblatt 90/19**

(84) Benannte Vertragsstaaten:
**BE CH DE FR GB IT LI NL**

(56) Entgegenhaltungen:
**EP-A- 0 108 294
DE-B- 1 247 284**

**Römpp, Chemie-Lexikon Band 8 (1983), Seite 1805**

(73) Patentinhaber: **BASF Aktiengesellschaft,
Carl-Bosch-Strasse 38, D-6700 Ludwigshafen(DE)**

(72) Erfinder: **Fuchs, Hugo, Dr., Egellstrasse 28,
D-6700 Ludwigshafen(DE)**
Erfinder: **Weiss, Franz-Josef, Dr., Schilfweg 1,
D-6808 Neuhofen(DE)**
Erfinder: **Thomas, Erwin, Borngasse 12,
D-6713 Freinsheim(DE)**
Erfinder: **Ritz, Josef, Dr., Osloer Weg 8,
D-6700 Ludwigshafen(DE)**

## Beschreibung

Für spezielle Zwecke werden in der Technik wäßrige Lösungen von freiem Hydroxylamin hoher Konzentration verlangt. Aus der DE-B 1 247 284 ist bereits ein Verfahren bekannt, bei dem man alkoholische Lösungen von freiem Hydroxylamin durch Umsetzen von Hydroxylammoniumsulfat mit Ammoniak in Alkohol als Lösungsmittel und Abtrennen des Ammoniumsulfats erhält. Für eine Reihe von Verwendungszwecken sind jedoch alkoholische Lösungen nicht brauchbar. Andererseits müssen beim Transport von solchen Lösungen besondere Vorkehrungen wegen ihrer Brennbarkeit getroffen werden. Das gleiche gilt für das aus der EP-Patentanmeldung 108 294 beschriebene Verfahren, bei dem man alkoholische Lösungen von freiem Hydroxylamin durch Umsetzung von Hydroxylammoniumsulfat mit methanolischer Alkalilauge und Abtrennen des anfallenden Alkalisulfats erhält. Es wurde auch schon versucht, wäßrige Lösungen von freiem Hydroxylamin durch Elektrodialyse von wäßrigen Lösungen von Hydroxylammoniumsulfat in Elektrolysezellen mit semipermeablen Trennwänden herzustellen. Ein solches Verfahren ist jedoch technisch aufwendiger und hat bislang keinen Eingang in die Technik gefunden. Ebenfalls ist bekannt durch Umsetzung von wäßrigen Hydroxylammoniumsulfat-Lösungen mit Bariumoxid, wäßrige Lösungen von freiem Hydroxylamin zu erhalten. Hierbei tritt jedoch das Problem der Bariumsulfat-Filtration auf.

Aus der EP-A 108 294 ist ein Verfahren bekannt, bei dem man Hydroxylammoniumsulfat mit Ammoniak in niederen Alkoholen umsetzt und die so erhaltene Lösung von freiem Hydroxylamin von festem Ammoniumsulfat und Hydroxylammoniumsulfat abtrennt. Ein beträchtlicher Teil des freien Hydroxylamins verbleibt jedoch im Filterkuchen, so daß selbt nach Auswaschen die Ausbeute an freiem Hydroxylamin unbefriedigend bleibt. Ein Hinweis, wie man zu wäßrigen Lösungen von freiem Hydroxylamin gelangt, wird nicht gegeben. Ein Abdestillieren von Alkanolen nach Zusatz von Wasser erscheint im Hinblick auf Römpp Chemielexikon Band 8 (1983), Seite 1805, nicht angezeigt, wonach freies Hydroxylamin äußerst instabil ist und sich in alkalisch reagierenden Lösungen – freies Hydroxylamin ist alkalisch – leicht zersetzt, wobei die Zersetzung häufig explosionsartig verläuft.

Es war deshalb die technische Aufgabe gestellt, ein Verfahren zur Herstellung von wäßrigen Lösungen von freiem Hydroxylamin zur Verfügung zu stellen, das einfach durchführbar ist und bei dem man wäßrige Lösungen mit einem variierbaren Gehalt an Hydroxylamin in hoher Ausbeute und unter geringen Verlusten an Hydroxylamin erhält.

Diese Aufgabe wird gelöst in einem Verfahren zur Herstellung von wäßrigen Lösungen von freiem Hydroxylamin, wobei man

a) Hydroxylammoniumsulfat mit Ammoniak im Unterschuß in wasserfreien niederen Alkanolen als Lösungsmittel umsetzt und eine Lösung von freiem Hydroxylamin und festem Ammoniumsulfat mit Resten an Hydroxylammoniumsulfat erhält,

b) aus dem so erhaltenen Reaktionsgemisch festes Ammoniumsulfat und Hydroxylammoniumsulfat abtrennt und als Filtrat eine alkoholische Lösung von freiem Hydroxylamin erhält,

c) zu der so erhaltenen alkoholischen Lösung von freiem Hydroxylamin chelatbildende Stabilisatoren und Wasser, das frei von Schwermetallionen ist, zugibt und

d) aus der freies Hydroxylamin, Stabilisatoren und Wasser enthaltenden alkoholischen Lösung die Alkanole bei einer Temperatur unterhalb 30°C unter vermindertem Druck abdestilliert.

Das neue Verfahren hat den Vorteil, daß es wenig aufwendig und auf einfache Weise durchführbar ist. Ferner hat das neue Verfahren den Vorteil, daß man wäßrige Lösungen von freiem Hydroxylamin mit variablem Gehalt an freiem Hydroxylamin erhält. Zudem hat das neue Verfahren den Vorteil, daß es mit hohen Ausbeuten verläuft und geringe Verluste an Hydroxylamin eintreten. Schließlich hat das neue Verfahren den Vorteil, daß es einen geringen Gehalt an Fremddionen in der wäßrigen Hydroxylamin-Lösung aufweist.

Erfindungsgemäß geht man von festem Hydroxylammoniumsulfat aus. Vorteilhaft wendet man Hydroxylammoniumsulfat in feiner Verteilung, z.B. in einer Korngröße von 0,001 bis 0,2 mm an.

Als Lösungsmittel für das zu erzeugende freie Hydroxylamin verwendet man niedere Alkanole, insbesondere solche mit 1 bis 3 Kohlenstoffatomen, wie Methanol, Ethanol, Propanol oder Isopropanol oder deren Gemische. Besonders bewährt haben sich Ethanol oder Methanol sowie Mischungen aus Methanol und Propanol, z.B. im Verhältnis 1:1. Um einen möglichst niedrigen Gehalt an Fremddionen zu erzielen, wendet man wasserfreie Alkanole an. Vorteilhaft setzt man je Gewichtsteil Hydroxylammoniumsulfat 2 bis 10 Gew. Teile Alkanole ein.

Erfindungsgemäß wird das Hydroxylammoniumsulfat mit Ammoniak umgesetzt. Zweckmäßig leitet man gasförmiges Ammoniak in die Suspenion von festem Hydroxylammoniumsulfat in den vorerwähnten Alkanolen ein. Ammoniak wird im Unterschuß, bezogen auf die verwendete Menge an Hydroxylammoniumsulfat, eingesetzt, z.B. 0,3 bis 2 Mol Ammoniak je Mol Hydroxylammoniumsulfat. Dies wird zweckmäßig dadurch erzielt, daß man zunächst in eine Suspension von festem Hydroxylammoniumsulfat in den erwähnten Alkoholen gasförmiges Ammoniak einleitet, bis ein geringer Überschuß vorhanden ist und dann wiederum festes Hydroxylammoniumsulfat zusetzt, um einen Unterschuß an Ammoniak zu erreichen.

Vorteilhaft wird die Umsetzung bei einer Temperatur von 5 bis 70°C, insbesondere 10 bis 30°C durchgeführt. Nach beendeter Reaktion wird das Reaktionsgemisch zweckmäßig auf eine Temperatur von –10 bis 25°C abgekühlt. Man erhält so eine alkoholische Lösung von freiem Hydroxylamin und festes Ammoniumsulfat mit restlichem Hydroxylammoniumsulfat.

In der Stufe b) wird aus der vorerwähnten Lösung festes Ammoniumsulfat und restliches Hydroxylammoniumsulfat abgetrennt, z.B. durch Filtration oder Zentrifugieren. Man erhält hierbei einen Filterkuchen aus festem Ammoniumsulfat und restlichem Hydroxylammoniumsulfat sowie als Filtrat eine alkoholische Lösung von freiem Hydroxylamin.

In der nachfolgenden Stufe c) werden zu der alkoholischen Lösung von freiem Hydroxylamin chelatbildende Stabilisatoren und Wasser, das frei von Schwermetallionen ist, in einer Menge, die der gewünschten Endkonzentration von Hydroxylamin entspricht, zugesetzt.

Geeignete chelatbildende Stabilisatoren sind beispielsweise Hydroxychinaldine wie 8-Hydroxychinaldin, Flavone wie Morin, Hydroxychinoline wie 8-Hydroxychinolin, Hydroxyanthrachinone wie Chinalizarin, Reduktone und/oder Reduktonate, z.B. 2,3-Didehydrohexone-1,4-lacton, ferner Alkalisalze der Ethylendiamintetraessigsäure. Die Konzentration an Stabilisatoren, bezogen auf freies Hydroxylamin, beträgt vorteilhaft $5 \cdot 10^{-4}$ bis 1 Gew.-%, insbesondere $5 \cdot 10^{-3}$ bis $5 \cdot 10^{-2}$ Gew.-%. Besonders bewährt haben sich als Stabilisatoren 8-Hydroxychinaldin und 8-Hydroxychinolin.

In der nachfolgenden Stufe d) werden aus den so stabilisierten wäßrig-alkoholischen Lösungen von freiem Hydroxylamin Alkanole abdestilliert. Hierbei hält man eine Temperatur kleiner 30°C, z.B von 5 bis 20°C, ein. Das Abdestillieren der Alkanole führt man unter vermindertem Druck, z.B. von 20 bis 300 mbar durch.

Es hat sich bewährt, wenn man den noch Hydroxylammoniumsulfat enthaltenden Filterkuchen aud der Stufe b) wieder zusammen mit frischem Hydroxylammoniumsulfat in die Stufe a) zurückführt. Desgleichen ist es vorteilhaft, die als Destillat in der Stufe d) anfallenden Alkohole, die geringe Mengen, z.B. bis zu 3 Gew.% freies Hydroxylamin enthalten, wieder in die Stufe a) oder c) zurückzuführen.

Wäßrige Lösungen von freiem Hydroxylamin, die nach dem Verfahren der Erfindung erhältlich sind, haben in der Regel einen Gehalt von 5 bis 60 Gew.%, insbesondere 20 bis 50 Gew.%, an freiem Hydroxylamin und eignen sich für die Umsetzung mit reinen Säuren zur Herstellung hochreiner Hydroxylammoniumsalze als Regler bei Polymerisationen, als Reaktand zur Herstellung spezieller organischer und anorganischer Zwischenprodukte.

Das Verfahren nach der Erfindung sei an folgendem Beispiel veranschaulicht.

Beispiel

In einem 2-l-Vierhalskolben, ausgerüstet mit einer Gaseinleitungsfritte, Thermometer, Rückflußkühler sowie einem Ultra-Turax-Rührer werden 124 g feinst gepulvertes Hydroxylammoniumsulfat mit einer Teilchengröße von 0,01 bis 0,1 mm in 500 ml Methanol aufgeschlämmt. Bei 15 bis 20°C leitet man über ca. 1,5 Stunden 34 bis 36 l Ammoniakgas ein. Die Suspension wird mit 6000 U/min. gerührt. Nach dem Einleiten des Ammoniaks fügt man weitere 40 g Hydroxylammoniumsulfat hinzu und rührt noch eine Stunde bei 15 bis 20°C nach.

Anschließend wird das Reaktionsgemisch abfiltriert und der Filterrückstand mit 100 ml Methanol nachgewaschen. Das Filtrat von 456 g enthält 52 g freies Hydroxylamin in Methanol. Im Filterrückstand findet man 13,8 g Hydroxylamin als nicht umgesetztes Hydroxylammoniumsulfat wieder. Insgesamt findet man somit 65,8 g Hydroxylamin von den eingesetzten 66,0 g Hydroxylamin wieder. Der Filterrückstand kann zusammen mit frischem Hydroxylammoniumsulfat wieder für einen neuen Ansatz eingesetzt werden. Die methanolische Lösung wird nun mit ca. 0,001 mol 8-Hydroxychinolin pro Mol freies Hydroxylamin sowie mit 76 g Wasser versetzt. In einem Rotationsverdampfer wird bei max. 30°C und 30 bis 40 mbar das Methanol entfernt. Man erhält einen wäßrigen Destillationsrückstand von 115 g mit einem Anteil von 45 g freiem Hydroxylamin.

Das abdestillierte Methanol enthält 4,3 g freies Hydroxylamin. Dieses kann ebenfalls wieder als Lösungsmittel für einen neuen Ansatz in Stufe a) oder c) verwendet werden.

Von den zur Destillation eingesetzten 52 g freien Hydroxylamin erhält man 45 g als wäßrige Lösung sowie 4,3 g in dem abdestillierten Methanol, d.h. 49,3 g werden wieder gefunden, d.s. 94,8 %, bezogen auf das zur Destillation eingesetzte Hydroxylamin.

Arbeitet man ohne Stabilisator, so beträgt die Ausbeute an freiem Hydroxylamin in der wäßrigen Phase zusammen mit dem Hydroxylamin im abdestillierten Methanol nur ca. 82 %.

Patentansprüche

1. Verfahren zur Herstellung von wäßrigen Lösungen von freiem Hydroxylamin, dadurch gekennzeichnet, daß man
   a) Hydroxylammoniumsulfat mit Ammoniak im Unterschuß in wasserfreien niederen Alkanolen als Lösungsmittel umsetzt und eine Lösung von freiem Hydroxylamin und festem Ammoniumsulfat mit Resten an Hydroxylammoniumsulfat erhält,
   b) aus dem so erhaltenen Reationsgemisch festes Ammoniumsulfat und Hydroxylammoniumsulfat abtrennt und als Filtrat eine alkoholische Lösung von freiem Hydroxylamin erhält,
   c) zu der so erhaltenen alkoholischen Lösung von freiem Hydroxylamin chelatbildende Stabilisatoren und Wasser, das frei von Schwermetallionen ist, zugibt und
   d) aus der freies Hydroxylamin, Stabilisatoren und Wasser enthaltenden alkoholischen Lösung die Alkanole bei einer Temperatur unterhalb 30°C unter vermindertem Druck abdestilliert.

2. Verfahren nach Anspruch 1, dadurch gekennzeichnet, daß man in der ersten Stufe eine Temperatur von 5 bis 70°C einhält.

3. Verfahren nach den Ansprüchen 1 und 2, dadurch gekennzeichnet, daß man das in der Stufe b) anfallende feste Gemisch aus Ammoniumsulfat und Hydroxylammoniumsulfat zusammen mit frischem Hydroxylammoniumsulfat wieder in der Stufe a) einsetzt.

4. Verfahren nach den Ansprüchen 1 bis 3, dadurch gekennzeichnet, daß man die in der Stufe d) als Destillat anfallenden Alkanole wieder in die Stufe a) oder c) zurückführt.

5. Verfahren nach den Ansprüchen 1 bis 4, dadurch gekennzeichnet, daß man Alkanole mit 1 bis 3 Kohlenstoffatomen verwendet.

## Claims

1. A process for the preparation of an aqueous solution of free hydroxylamine, wherein

   a) hydroxylammonium sulfate is reacted with ammonia in an amount which is less than the stoichiometric amount in an anhydrous low alkanol as solvent, and a solution of free hydroxylamine and solid ammonium sulfate with residues of hydroxylammonium sulfate is obtained,

   b) solid ammonium sulfate and hydroxylammonium sulfate are separated off from the resulting reaction mixture, and an alcoholic solution of free hydroxylamine is obtained as the filtrate,

   c) a chelate-forming stabilizer and water, which is free of heavy metal ions, are added to the resulting alcoholic solution of free hydroxylamine, and

   d) the alkanol is distilled off from the alcoholic solution containing free hydroxylamine, the stabilizer and water, at below 30°C and under reduced pressure.

2. A process as claimed in claim 1, wherein a temperature of from 5 to 70°C is maintained in the first stage.

3. A process as claimed in claims 1 and 2, wherein the solid mixture of ammonium sulfate and hydroxylammonium sulfate obtained in stage b) is reused, together with fresh hydroxylammonium sulfate, in stage a).

4. A process as claimed in claims 1 or 2 or 3, wherein the alkanols obtained as the distillate in stage d) are recycled to stage a) or c).

5. A process as claimed in claims 1 or 2 or 3 or 4, wherein an alkanol of 1 to 3 carbon atoms is used.

## Revendications

1. Procédé de préparation de solutions aqueuses d'hydroxylamine libre, caractérisé en ce que

   a) l'on fait réagir du sulfate d'hydroxylammonium avec de l'ammoniac en quantité insuffisante dans des alcanols inférieurs anhydres servant de solvant et on obtient une solution d'hydroxylamine libre et de sulfate d'ammonium solide avec des résidus de sulfate d'hydroxylammonium,

   b) on sépare du mélange réactionnel ainsi obtenu le sulfate d'ammonium et le sulfate d'hydroxylammonium solides et on obtient, en tant que filtrat, une solution alcoolique d'hydroxylamine libre,

   c) à la solution alcoolique d'hydroxylamine libre ainsi obtenue, on ajoute des stabilisants chélateurs et de l'eau qui est exempte d'ions de métaux lourds et

   d) de la solution alcoolique contenant l'hydroxylamine libre, des stabilisants et de l'eau, on chasse les alcanols par distillation à une température inférieure à 30°C sous pression réduite.

2. Procédé selon la revendication 1, caractérisé en ce qu'on maintient une température de 5 à 70°C dans la première étape.

3. Procédé selon la revendication 1 ou 2, caractérisé en ce qu'on réutilise, dans l'étape a), le mélange solide de sulfate d'ammonium et de sulfate hydroxylammonium obtenu dans l'étape b), en même temps que du sulfate d'hydroxylammonium frais.

4. Procédé selon l'une quelconque des revendications 1 à 3, caractérisé en ce qu'on renvoie dans l'étape a) ou c) les alcanols obtenus en tant que distillat dans l'étape d).

5. Procédé selon l'une quelconque des revendications 1 à 4, caractérisé en ce qu'on utilise des alcanols contenant de 1 à 3 atomes de carbone.